# EUROPÄISCHE PATENTANMELDUNG

(11) **EP 3 144 097 A1**
(43) Veröffentlichungstag der Anmeldung: **22.03.2017**
(21) Anmeldenummer: 16187194.2
(22) Anmeldetag: 05.09.2016
(51) Int. Cl.: B23P 21/00, B23Q 37/00

(54) **MODULARE BEARBEITUNGSANLAGE**

(30) Priorität: 18.09.2015 DE 102015218027
(71) Anmelder: Magna Exteriors&Interiors (Bohemia) S.r.o., 46078 Liberec (CZ)
(72) Erfinder: Neuman, Pavel, 46001 Liberec 14 (CZ)
(74) Vertreter: Rausch, Gabriele

(57) **Zusammenfassung**

Es wird eine modulare Bearbeitungsanlage (1) für die Bearbeitung von Bauteilen vorgeschlagen, wobei eine Abfolge von Bearbeitungsschritten in Bearbeitungsstationen erfolgen, und die einzelnen Bearbeitungsstationen in mindestens einem Basismodul (2) aufgebaut sind, wobei die Basismodule jeweils mit Verbindungsmodulen (3) miteinander verbunden sind und die Bauteilträgern mit den Bauteilen mit stationären, in den jeweiligen Modulen (2, 3) verankerten Robotern (4) zwischen den Bearbeitungs- oder Prozesszellen (8, 8') und zwischen Bearbeitungs- oder Prozesszellen (8, 8') und den Verbindungsmodulen (3) bewegbar sind.

## Beschreibung

Die Erfindung betrifft eine modulare Bearbeitungsanlage für die Bearbeitung von Bauteilen wobei eine Abfolge von Bearbeitungsschritten nacheinander erfolgen muss.

### Stand der Technik

Modulare Bearbeitungsanlagen für die Bearbeitung von unterschiedlichen Bauteilen sind im Stand der Technik bekannt. Dabei werden mehrere Bearbeitungsschritte nacheinander ausgeführt. Die Werkstücke werden im Stand der Technik dabei über Transportbänder zu den einzelnen Bearbeitungsstationen befördert. Weiterhin ist bekannt, dass einzelne Bearbeitungsstationen wie zum Beispiel mobile Lackierstationen in Containern aufgebaut werden. Allerdings erfolgen hier keine unterschiedlichen Bearbeitungsschritten, da die Container einen einzigen Arbeitsraum bilden.

Es ist daher Aufgabe der Erfindung eine modulare Bearbeitungsanlage für die Bearbeitung von Bauteilen zu Verfügung zu stellen, die einfach und flexibel aufbaubar ist und völlig auf Transportbänder verzichtet.

Gelöst wird die Aufgabe mit einer modulare Bearbeitungsanlage für die Bearbeitung von Bauteilen wobei eine Abfolge von Bearbeitungsschritten erfolgen muss, wobei die einzelnen Bearbeitungsstationen in mindestens einem Basismodul aufgebaut sind, wobei die Basismodule jeweils mit Verbindungsmodulen miteinander verbunden sind und die Bauteilträger mit den Bauteilen mit stationären, in den Modulen verankerten Robotern zwischen den Bearbeitungsstationen bewegbar sind.

Dieser Aufbau hat den Vorteil, dass die Module einfach aufgebaut und ausgetauscht wird können, wobei zudem keine Transportbänder vorhanden sind. Durch den Einsatz von Robotern ist die Bearbeitungsanlage stark an die Anforderungen anpassbar. Die Roboter erfüllen dabei sowohl die Aufgabe, Bauteile in den einzelnen Stationen zu bewegen, als auch die Aufgabe die Bauteile bzw. die Bauteileträger zwischen den Stationen weiterzureichen.

Es ist dabei von Vorteil, wenn die Module aus gleichartigen Containern, insbesondere aus Standardcontainern zusammengesetzt sind. Die Verwendung von Standardcontainern oder auch quasi standardisierten Containern ermöglicht einen einfachen Aufbau und Inbetriebnahme der Container, bei gleichzeitiger Reduktion der Kosten.

Es ist von Vorteil, dass die Roboter in den Modulen mit den jeweiligen Roboterarmen zwei Kreise beschreiben, wobei der erste Kreis sich innerhalb eines Moduls erstreckt. Der zweite Kreis erstreckt sich auf mindestens ein Verbindungsmodul. Durch die Verwendung von Robotern, die mit ihren Roboterarmen sowohl innerhalb eines Moduls als auch zur Übergabe der Bauteile bzw. der Bauteileträger zwischen den Stationen eingepasst sind, kann auf Transportbänder völlig verzichtet werden.

In einer vorteilhaften Ausführungsform sind in den Verbindungsmodulen Drehgestelle angeordnet, wodurch in den Prozess eine definierte Verzögerung eingebaut ist.

Es ist von Vorteil, dass die Bauteile direkt von Roboter zu Roboter oder direkt von Roboter zu Drehgestell zu Roboter übergebbar sind, wodurch eine Bauteilträgerübergabe in einer Taktzeit von unter 10 sec erfolgen kann. Bei geeigneter Anordnung sind sogar Taktzeiten unter 5 sec möglich.

Ergänzend ist es auf einfache Art und Weise möglich, dass Module mit Entsorgungsanlagen und/oder Absaugungen versehen sind.

### Beschreibung der Erfindung

Die Erfindung wird nachfolgend beispielhaft unter Bezugnahme auf die beigefügte Zeichnung beschrieben.
- Fig. 1: zeigt eine schematische Darstellung der beispielhaften Ausführungsform von oben gesehen
- Fig. 2: zeigt einen Schnitt durch die Bearbeitungsanlage parallel zum Boden
- Fig. 3: zeigt einen Schnitt durch die Bearbeitungsanlage senkrecht zum Boden

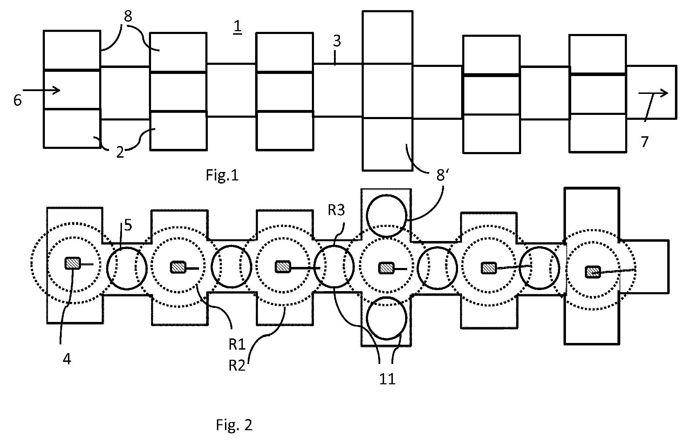

Figur 1 zeigt eine Aufsicht auf eine modulare Bearbeitungsanlage die aus Basismodulen 2 sowie aus Verbindungsmodulen 3 besteht. In der beispielhaften Ausführungsform sind drei Basismodule 2 nebeneinander angeordnet.

Die drei Basismodule 2 stellen zusammen in diesem Beispiel jeweils einer Bearbeitungs- oder Prozesszelle 8 dar. Im gezeigten Beispiel sind drei Bearbeitungs- oder Prozesszellen 8 nacheinander aufgebaut. Die Bearbeitungs- oder Prozesszelle 8 sind jeweils über ein Verbindungsmodul 3 mit der nächsten Bearbeitungs- oder Prozesszelle 8 verbunden.

Zwischen den Bearbeitungs- oder Prozesszelle 8 ist eine Bearbeitungszelle 8' angeordnet, die aus Verbindungsmodulen 3 besteht. Die dargestellte Bearbeitungsanlage besitzt jeweils Verbindungsmodule 3 zwischen den Bearbeitungs- oder Prozesszellen 8. Allerdings ist auch ein Aufbau ohne Verwendung von Verbindungsmodulen möglich, nämlich dann, wenn keine Verzögerungsschritte zwischen den Stationen erforderlich sind. Die Bauteile, die in einer solchen Bearbeitungsanlage bearbeitet werden sollen, werden über eine Bestückung 6 in die Anlage geführt und über eine Werkstückentnahme 7 entnommen. Die Zuführung und Entnahme der Bauteile kann dabei manuell erfolgen oder über Zuführung mit einem Transportband oder unter Verwendung von Robotern. Dabei werden die Bauteile bereits auf dem Bauteilträger angeordnet für die Anlage vorbereitet, oder aber die Bauteile werden in einer ersten Vorbereitungszelle mit dem Bauteilträger verbunden , die dann der erste Roboter in der Roboterkette aufnimmt.

In der Figur 2 ist in einem Schnittbild die Bearbeitungsanlage dargestellt. Dabei ist zu erkennen, dass in den einzelnen Bearbeitungs- oder Prozesszellen 8 und 8' Roboter 4 aufgestellt sind. Die Roboter 4 besitzen dabei mindestens einen Roboterarm 5, der Arbeiten in unterschiedlichen Radien R1 und R2 ausführen kann. Es handelt sich dabei um gebräuchliche Industrieroboter, die mit einem zentral fixierten Fuß versehen sind und über dieser Befestigung mit einem oder mehreren Armen kreisförmige Bewegungen bei gleichzeitiger nahezu beliebiger Verdrehung des Roboterarms beweglich sind. Dabei kann der Arm mehrere Radien vom ganz gefalteten Zustand bis zum vollständig gestreckten Zustand einnehmen. Der kleinere Radius R1 erstreckt sich innerhalb einer Bearbeitungs- oder Prozesszelle 8, 8' der größere Radius R2 erstreckt sich in das benachbarte Verbindungsmodul 3 hinein. In den Verbindungsmodulen 3 sind Drehgestelle 11 angedeutet.

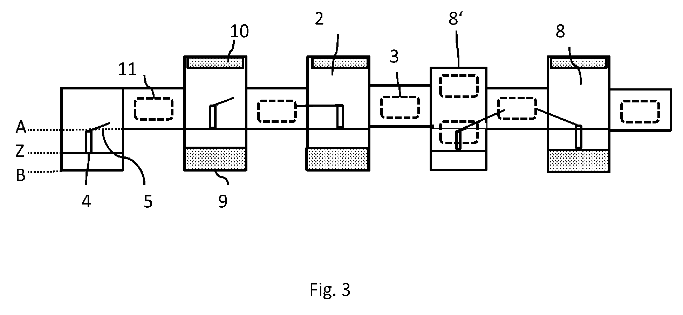

In Figur 3 ist ein Schnittbild senkrecht zum Boden gezeigt. Die einzelnen Basismodule 2 sowie Verbindungsmodule 3 sind zu einzelnen Bearbeitungs- oder Prozesszellen 8 zusammengefügt. In diesem Beispiel sind für die Bearbeitungszellen 8 zwei Container auf der Bodenebene B übereinandergestapelt. Dadurch gewinnt man Raum für Ver-und Entsorgung. In der Breite sind zwei oder drei Container ohne Zwischenwände zusammengebaut, um Bearbeitungsraum zu gewinnen. Roboter 4 mit Roboterarmen 5 sind in den einzelnen Bearbeitungsstationen angebracht. Je nach Aufgabe können auch zwei oder mehr Roboter pro Bearbeitungsstation aufgestellt werden. Drehgestelle 11 sind in den Verbindungsmodulen 3 eingebaut. Die Basismodule enthalten beispielhaft Entsorgungs- oder Versorgungsanlagen 9 wie Absaugungen unterhalb der Arbeitsebene Z sowie Luftführungen 10 oberhalb des Arbeitsraums im Container.

In den modularen Aufbau lassen sich Entsorgungsanlagen, die in das Raster der Container angepasst sind, verwenden.

Beispielhaft wird eine Bearbeitungsanlage für das Lackieren von großem Kunststoffbauteilen beschrieben. Ein beispielhaftes Bauteil wäre ein Frontmodul eines Fahrzeugs oder ein Heckmodul oder einen Tür usw.

Die Kunststoffbauteile sitzen auf Bauteileträgern, die für eine verwindungsfreie Lagerung sorgen. Bauteileträger sind aber nur eine Möglichkeit, die Bauteile können auch direkt verarbeitet werden. Die Bauteile werden zur Bestückung der Anlage am ersten Basismodul mit Bauteilträgern zur Verfügung gestellt. Der erste Roboter 4 greift mit seinem Arm einen Bauteilträger. Die Montagehöhe des aufnehmenden Roboters 4 in der ersten Zelle liegt dabei auf einem Zwischenniveau Z, damit der Roboter den Bauteilträger von der Bodenebene B zur Arbeitsebene A befördern kann. In der ersten der Bearbeitungszellen 8 wird das Bauteil beispielsweise auf eine Lackierung vorbereitet. Das kann durch einen ersten Reinigungsschritt, z. B. einen CO2-Reiningung, durch eine chemische Vorbehandlung oder durch eine Wärmevorbehandlung, durch ein Abflammen usw. erfolgen. Sollten die gesamten Vorbereitungsschritte nicht in einer einzigen Zelle ausführbar sein, ist auch schon hier die Weitergabe des Bauteilträgers in der Nachbarzelle einen weitere Möglichkeit.

Der Roboter übergibt anschließend den Bauteilträger in das erste Verbindungsmodul 3, indem sich ein Drehgestell 11 befindet. Das Bauteil wird in das Drehgestell 11 eingehängt und dreht sich bis es an einer Position angekommen ist, in der es vom zweiten Roboter in der zweiten Bearbeitungsstation wieder aufgenommen werden kann. Durch die Zwischenlagerung im Drehgestell kann das Bauteil je nach Vorbehandlung ausdunsten, auskühlen oder ausheilen. In den weiteren Bearbeitungszellen erfolgt jeweils pro Zelle ein Prozessschritt, beispielsweise das Aufbringen einer Lackierung mit einem Primer, danach das Aufbringen einer ersten Lackierung, sowie das Aufbringen einer endgültigen Lackierung. Für alle diese Schritte ist der Einsatz von getrennten Zellen vorteilhaft.

In der Bearbeitungszelle 8' sind mehrere Drehgestelle angeordnet, in denen die Bauteilträger mit den Bauteilen nach und nach eingehängt und einer Abdampf- , Abkühl- und Ausheilphase unterzogen werden. Durch die Verwendung von vier Drehgestellen, gewinnt man ausreichend Zeit, damit die Bauteile trockenen und abkühlen können. Das heißt die Anzahl der Drehgestelle ist direkt proportional zu der Verweildauer in der Bearbeitungsstation 8'. Danach können die Bauteileträger mit den Bauteilen direkt entnommen werden oder weiteren Bearbeitungsschritten unterzogen werden.

Verwendet man bekannte Systeme mit Trockenauswaschungen, kommt das modulare Bearbeitungssystem völlig ohne Wasseranschluss aus. Eine Versorgung mit Farbe sowie mit weiteren Bearbeitungsstoffen erfolgt über in die Container eingeschobenen Versorgungsanlagen. Auch die Versorgung mit Energie, Heizung sowie die Druckluftversorgung, die Abgasanlage sowie Trockner sind als Module ausgebildet und werden einfach in die Container unterhalb der Arbeitsebene A eingepasst.

Der ganze Containeraufbau ist sehr flexibel und kann sowohl in einer Halle als auch vor einer Produktionsanlage in einfacher Art und Weise errichtet werden. Die einzelnen Bearbeitungszeiten sind auf einfache Art und Weise an die jeweiligen Anforderungen anpassbar. Durch Verwendung von Robotern, die Bauteilträger mit Bauteilen direkt von Roboterarm zu Roboterarm oder über einen Zwischenschritt in einem Drehgestell zur nächsten Bearbeitungsstationen geben, kann auf einem Transportförderband und auf Skid-Technik unter Verwendung von Rollen gänzlich verzichtet werden.

Die Übergabezeiten zwischen den Bearbeitungs- oder Prozesszellen und zwischen Bearbeitungs- oder Prozesszelle und Verbindungszellen wird mit dieser Technologie unter 10 sec gedrückt. Bei einer geeigneten Auslegung der Roboterarme sowie der Größe der Container kann dabei die Übergabezeit von unter 5 sec erzielt werden.

### Bezugszeichenliste

1 modulare Bearbeitungsanlage
2 Basismodul
3 Verbindungsmodul
4 Roboter
5 Roboterarm
R1 Radius Zelle innen
R2 Radius zellenübergreifend
R3 Radius Drehgestell
6 Bestückung
7 Werkstückentnahme
8 Bearbeitungs- oder Prozesszelle
9 Ver- und Entsorgungsanlagen
10 Luftführung
11 Drehgestell
A Arbeitsebene
B Bodenebene
C Zwischenebene

## Patentansprüche

1. Modulare Bearbeitungsanlage (1) für die Bearbeitung von Bauteilen auf Bauteilträgern, wobei eine Abfolge von Bearbeitungsschritten in Bearbeitungsstationen erfolgen, **dadurch gekennzeichnet, dass** die einzelnen Bearbeitungsstationen in mindestens einem Basismodul (2) aufgebaut sind, wobei die Basismodule (2) jeweils mit Verbindungsmodulen (3) miteinander verbunden sind und die Bauteilträgern mit den Bauteilen mit stationären, in den jeweiligen Modulen (2,3) verankerten Robotern (4) zwischen den Bearbeitungs- oder Prozesszellen (8,8') und zwischen Bearbeitungs- oder Prozesszellen (8,8') und Verbindungsmodulen (3) bewegbar sind.

2. Modulare Bearbeitungsanlage nach Anspruch 1 **dadurch gekennzeichnet, dass** die Module (2,3) aus standardisierten Containern oder Standardcontainern zusammengesetzt sind.

3. Modulare Bearbeitungsanlage nach Anspruch 1 **dadurch gekennzeichnet, dass** die Roboter (4) in den Modulen (2,3) mit den jeweiligen Roboterarmen (5) zwei Kreise (R1, R2) beschreiben, wobei der erste Kreis (R1) sich innerhalb eines Moduls erstreckt.

4. Modulare Bearbeitungsanlage nach Anspruch 3 **dadurch gekennzeichnet, dass** der zweite Kreis (R2) sich auf mindestens ein Verbindungsmodul (3) erstreckt.

5. Modulare Bearbeitungsanlage nach Anspruch 1 **dadurch gekennzeichnet, dass** in den Verbindungsmodulen (3) Drehgestelle (11) angeordnet sind.

6. Modulare Bearbeitungsanlage nach Anspruch 1 **dadurch gekennzeichnet, dass** die Bauteilträger mit den Bauteilen direkt von Roboter (4) zu Roboter (4) übergebbar sind

7. Modulare Bearbeitungsanlage nach Anspruch 1 **dadurch gekennzeichnet, dass** die Bauteilträger mit den Bauteilen direkt von Roboter (4) zu Drehgestell (11) zu Roboter (4) übergebbar sind.

8. Modulare Bearbeitungsanlage nach Anspruch 1 **dadurch gekennzeichnet, dass** Module mit Absaugungen, Entsorgungs- und/oder Versorgungsanlagen (9) und/oder Luftzuführungen (10) versehen sind.

9. Modulare Bearbeitungsanlage nach Anspruch 1 **dadurch gekennzeichnet, dass** die Bauteilübergabe in einer Taktzeit von unter 10 sec erfolgt.
